# FASCICULE DE BREVET EUROPEEN

(11) **EP 3 465 873 B1**
(45) Date de publication et mention de la délivrance du brevet: **13.01.2021**
(21) Numéro de dépôt: 17731216.2
(22) Date de dépôt: 19.05.2017
(51) Int. Cl.: H02K 1/02, H02K 1/27

(54) **MACHINE ÉLECTRIQUE TOURNANTE MUNIE D'AIMANTS EN TERRE RARE À FAIBLE TAUX DE DYSPROSIUM**
DREHENDE ELEKTRISCHE MASCHINE VERSEHEN MIT SELTENERDMAGNETEN MIT KLEINEM ANTEIL DYSPROSIUM
ROTATING ELECTRIC MACHINE PROVIDING RARE EARTH MAGNETS WITH LOW RATE OF DYSPROSIUM

(30) Priorité: 25.05.2016 FR 1654694
(43) Date de publication de la demande: 10.04.2019
(73) Titulaire: Valeo Equipements Electriques Moteur, 94046 Créteil Cedex (FR)
(72) Inventeur: DUBUS, Patrick, 78720 Saint Forget (FR); WALME, Benoit, 94046 Creteil (FR); DUARTE, Johnny, 94046 Creteil (FR); RAKOTOVAO, Mamy, 94046 Creteil (FR)
(74) Mandataire: Duprez, Richard
(86) Numéro de dépôt international: PCT/FR2017/051232
(87) Numéro de publication internationale: WO 2017/203138

(56) Documents cités:
- JP-A- 2012 004 576
- JP-A- 2014 082 933

## Description

L'invention porte sur une machine électrique tournante munie d'aimants en terre rare à faible taux de dysprosium. L'invention trouve une application particulièrement avantageuse avec les machines électriques intégrées dans un compresseur de climatisation de véhicule automobile.

De façon connue en soi, les machines électriques tournantes comportent un stator et un rotor solidaire d'un arbre. Le rotor pourra être solidaire d'un arbre menant et/ou mené et pourra appartenir à une machine électrique tournante sous la forme d'un alternateur, d'un moteur électrique, ou d'une machine réversible pouvant fonctionner dans les deux modes.

Le stator est monté dans un carter configuré pour porter à rotation l'arbre par exemple par l'intermédiaire de roulements. Le stator comporte un corps constitué par un empilage de tôles minces formant une couronne, dont la face intérieure est pourvue d'encoches ouvertes vers l'intérieur pour recevoir des enroulements de phase. Ces enroulements traversent les encoches du corps du stator et forment des chignons faisant saillie de part et d'autre du corps du stator. Les enroulements de phase sont obtenus par exemple à partir d'un fil continu recouvert d'émail ou à partir d'éléments conducteurs en forme d'épingles reliées entre elles par soudage.

Par ailleurs, le rotor comporte un corps formé par un empilage de feuilles de tôles maintenues sous forme de paquet au moyen d'un système de fixation adapté. Le rotor comporte des pôles formés par des aimants permanents logés dans des cavités ménagées dans la masse magnétique du rotor.

Afin d'améliorer les performances magnétiques de la machine électrique, il est connu d'utiliser des aimants permanents réalisés en Néodyme-Fer-Bore. Le problème de ce type d'aimants tels que divulgués dans la demande JP2012004576 est qu'ils contiennent du dysprosium en quantité importante, ce qui implique un coût de fabrication élevé ainsi que des problèmes d'approvisionnement compte tenu du nombre réduit de zones de production de ce matériau dans le monde.

JP2014082933 divulgue quant à lui une machine électrique tournante avec des aimants réalisés Néodyme-Fer-Bore à faible taux de dysprosium. L'invention vise à remédier efficacement à cet inconvénient en proposant une machine électrique tournante destinée à entraîner un compresseur de climatisation de véhicule automobile, caractérisée en ce qu'elle comporte un rotor comprenant un corps muni d'une pluralité de cavités dans chacune desquelles est positionné au moins un aimant réalisé en Neodyme-Fer-Bore dont le taux de dysprosium est inférieur à 2% en masse chaque aimant ayant une somme des taux de néodyme et de praséodyme compris entre 28 et 35% en masse et un taux de bore compris entre 0.5 et 1.5% en masse.

L'invention permet ainsi de minimiser le taux de dysprosium dans les aimants de la machine électrique tournante et donc de s'affranchir des problèmes liés à la fluctuation de son approvisionnement et à son coût.

Selon une réalisation, le taux de dysprosium est inférieur à 1.8% en masse. Selon une réalisation, le taux de dysprosium est inférieur à 0.03% en masse. Cela correspond à la présence d'impuretés dans l'aimant 29 dérivant du Néodyme.

Selon une réalisation, une taille des grains de l'aimant est inférieure à 8 micromètres.

Selon une réalisation, la taille des grains est de l'ordre de 3 micromètres.

Selon une réalisation, une somme des taux de néodyme et de praséodyme de chaque aimant vaut de préférence 33% en masse.

Selon une réalisation, un taux de bore de chaque aimant vaut de préférence 1% en masse.

Selon une réalisation, un taux de fer de chaque aimant est au moins égal à 60% en masse.

Selon une réalisation, une lame recouvre une face de chaque aimant.

Selon une réalisation, ladite machine électrique tournante est apte à fonctionner à une tension choisie parmi une des tensions suivantes: 12 Volts, 14 Volts + X Volts dans le cadre d'un réseau électrique flottant, ou 48 Volts.

Selon un autre aspect, l'invention a pour objet un compresseur de véhicule automobile caractérisé en ce qu'il comporte une machine électrique tournante telle que précédemment définie.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en perspective et en coupe partielle de la machine électrique tournante intégrée dans un compresseur;
La figure 2 est une vue de dessus de la machine électrique tournante selon la présente invention sans le bobinage statorique;
La figure 3 est une vue en coupe transversale du rotor selon la présente invention dans lequel un seul aimant a été représenté;
La figure 4 est une vue en perspective d'un aimant selon la présente invention;
La figure 5 est une représentation schématique des différentes étapes de fabrication des aimants en terre rare selon la présente invention.

Les éléments identiques, similaires, ou analogues conservent la même référence d'une figure à l'autre.

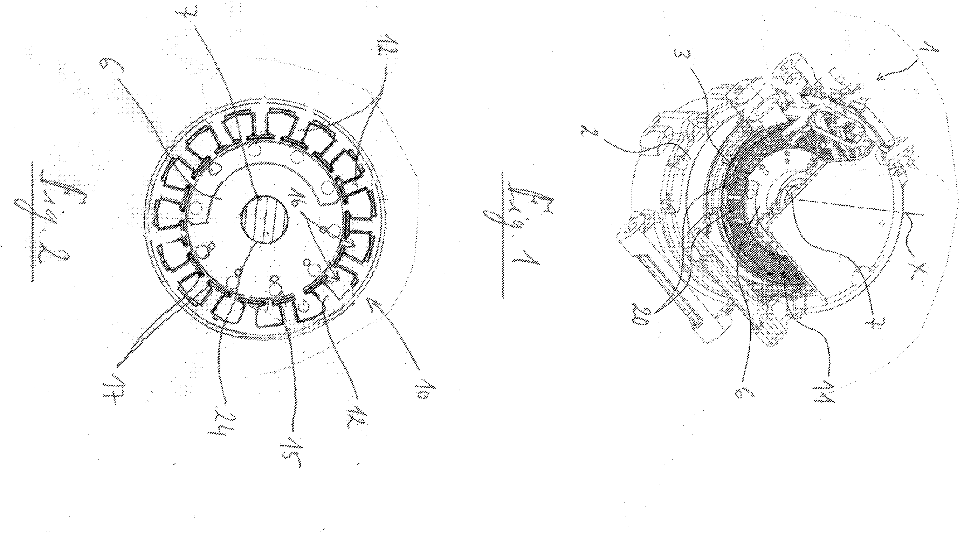

La figure 1 montre une machine électrique tournante 1 montée dans le carter 2 d'un compresseur de climatisation de véhicule automobile pour assurer son entraînement. Le compresseur est utilisé pour la compression de fluide réfrigérant du climatiseur. La machine 1 pourra fonctionner à une tension choisie parmi une des tensions suivantes: 12 Volts, 14 Volts + X Volts dans le cadre d'un réseau électrique flottant, ou 48 Volts.

Cette machine électrique 1 d'axe X comporte un stator bobiné 3, qui pourra être polyphasé, entourant un rotor 6 avec présence d'un entrefer entre la périphérie externe du rotor 6 et la périphérie interne du stator 3. Le rotor 6 à aimants permanents est monté sur un arbre 7. Le carter 2 est configuré pour porter à rotation l'arbre 7 via des roulements à billes et/ou à aiguilles.

Plus précisément, le stator 3 comporte un corps 10 visible en figure 2 et un bobinage 11. Le corps de stator 10 est réalisé dans un matériau ferromagnétique et consiste par exemple en un empilement axial de tôles planes. Le corps 10 comporte des dents 12 réparties angulairement de manière régulière sur une périphérie interne d'une culasse 15. Ces dents 12 délimitent des encoches 16, de telle façon que chaque encoche 16 est délimitée par deux dents 12 successives. La culasse 15 correspond ainsi à la portion annulaire externe pleine du corps 10 qui s'étend entre le fond des encoches 16 et la périphérie externe du stator 3.

Les encoches 16 débouchent axialement dans les faces d'extrémité axiales du corps 10. Les encoches 16 sont également ouvertes radialement vers l'intérieur du corps 10. Le stator 3 est muni de pieds de dent 17 du côté des extrémités libres des dents 12. Chaque pied de dent 17 s'étend circonférentiellement de part et d'autre d'une dent 12 correspondante.

Pour obtenir le bobinage, plusieurs enroulements de phases sont formés par des bobines 20 enroulées chacune autour d'une dent 12. Chaque bobine 20 est formée à partir à partir d'un fil électriquement conducteur recouvert d'une couche de matériau électriquement isolant tel que de l'émail. Dans un exemple de réalisation, un isolant de bobine pourra être intercalé entre chaque bobine 20 et la dent 12 correspondante. Les enroulements sont des enroulements polyphasés connectés en étoile ou en triangle dont les sorties sont reliées à un module électrique de commande (non représenté).

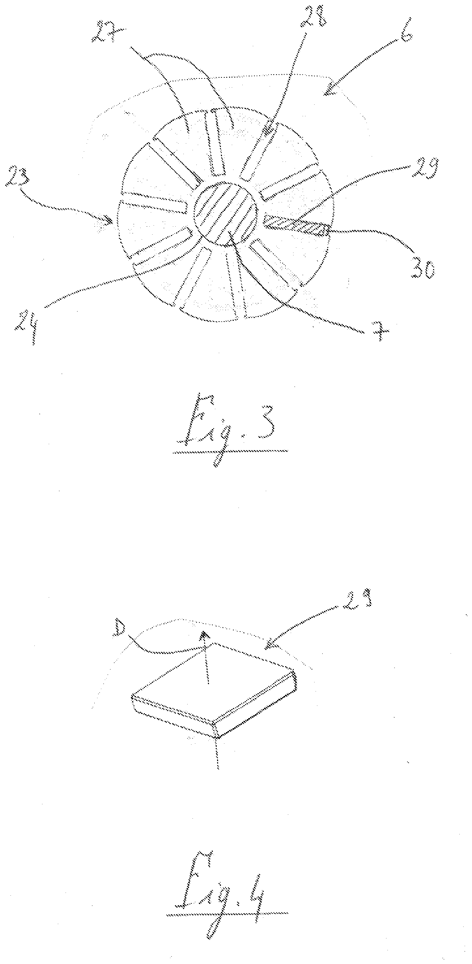

Par ailleurs, comme cela est illustré par la figure 3, le rotor 6 comporte un corps 23 formé par un empilement axial de tôles afin de diminuer les courants de Foucault. Le corps 23 peut être lié en rotation à l'arbre 7 de différentes manières, par exemple par emmanchement en force de l'arbre 7 cannelé à l'intérieur de l'ouverture centrale 24 du rotor 6, ou à l'aide d'un dispositif à clavette.

Le rotor 23 comporte des bras 27 délimitant deux à deux des cavités 28 destinées à recevoir des aimants permanents 29 formant les pôles du rotor. Pour faciliter la compréhension, un seul aimant 29 a été représenté mais chaque cavité 28 contient un aimant 29 correspondant.

Dans l'exemple représenté, le rotor 6 comporte dix pôles. Le nombre de pôles pourra toutefois être adapté en fonction de l'application.

De préférence, le rotor 6 est à concentration de flux, c'est-à-dire que les faces latérales en vis-à-vis des aimants 29 situés dans deux encoches consécutives sont de même polarité. Comme cela est illustré par la figure 4, les aimants 29 pourront présenter une forme parallélépipédique. La direction du champ magnétique est représentée par la flèche D.

Une lame de protection 30 montrée sur la figure 3 pourra être plaquée contre une face externe de chaque aimant 29 tournée vers l'entrefer de la machine électrique 1.

Conformément à l'invention, les aimants 29 interpolaires sont réalisés en Neodyme-Fer-Bore et présentent un taux de dysprosium inférieur à 2% en masse, voire inférieur à 1.8% en masse. De préférence, le taux de dysprosium est inférieur à 0.03% en masse, ce qui correspond à la présence d'impuretés dans l'aimant dérivant du Néodyme.

Une taille des grains de chaque aimant 29 est inférieure à 8 micromètres et est de préférence de l'ordre de 3 micromètres.

Un taux de néodyme et de praséodyme de chaque aimant 29 est compris entre 28 et 35% en masse et vaut de préférence 33%. Ce taux est ainsi à prendre en considération par rapport à la somme de la masse de néodyme et de praséodyme.

Un taux de bore de chaque aimant 29 est compris entre 0.5 et 1.5% en masse et vaut de préférence 1%.

Un taux de fer de chaque aimant 29 est au moins égal à 60% en masse.

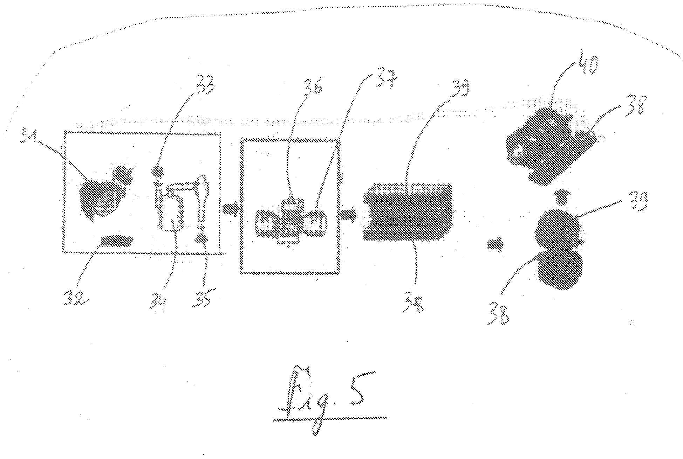

On décrit ci-après, en référence avec la figure 5, le procédé de fabrication de tels aimants 29. Après avoir pesé la quantité de matériaux nécessaires à la réalisation d'un ensemble d'aimants 29 dans les proportions en masse précédemment indiquées, les matériaux sont fondus dans un four à induction en atmosphère contrôlée contenant au moins 90% d'azote. Le matériau en fusion est ensuite déversé sur un rouleau rotatif 31 pour obtention de pétales de matériau 32.

Des grains 33 d'un diamètre de l'ordre de 100 micromètres sont ensuite introduits dans un dispositif de broyage 34 à jet d'azote pour obtenir une poudre 35 contenant des grains de l'ordre de 3 micromètres.

Un moule 36 assure ensuite un compactage de la poudre 35 pour obtenir un bloc 38. Le compactage est effectué sous un champ magnétique appliqué par des électro-aimants 37. Le champ magnétique pourra être orienté suivant la direction de l'application de l'effort de pressage ou suivant une direction perpendiculaire à l'effort de pressage.

Suite à l'étape de compactage, le bloc 38 est introduit dans un four 39 pour assurer sa cuisson ainsi qu'un post-traitement thermique.

Il est à noter que les étapes d'obtention des pétales 32, de broyage par jet d'azote, de compactage, et de cuisson sont réalisées sous atmosphère contrôlée avec présence d'azote à plus de 90 pourcents.

Le bloc 38 est ensuite usiné pour mise en forme et obtention des tolérances souhaitées à l'aide d'un dispositif adapté 39. Le bloc 38 est ensuite découpé au moyen d'un outil 40 pour obtenir une pluralité d'aimants 29 individuels. Il sera également possible de mettre en œuvre une étape de traitement de surface des aimants 29 afin de les protéger contre la corrosion.

En variante, les aimants 29 du rotor 6 pourront être de nuances différentes pour réduire les coûts, c'est-à-dire qu'il sera possible d'utiliser des aimants en terre rare tels que précédemment définis et des aimants en ferrite moins couteux. Le choix du type d'aimant dépend des applications et de la puissance recherchée de la machine.

Bien entendu, la description qui précède a été donnée à titre d'exemple uniquement et ne limite pas le domaine de l'invention dont on ne sortirait pas en remplaçant les différents éléments par tous autres équivalents.

## Revendications

1. Machine électrique tournante (1) destinée à entraîner un compresseur de climatisation de véhicule automobile, comportant un rotor (6) comprenant un corps (23) muni d'une pluralité de cavités (28) dans chacune desquelles est positionné au moins un aimant (29) réalisé en Neodyme-Fer-Bore dont le taux de dysprosium est inférieur à 2% en masse **caractérisé en ce que** chaque aimant (29) à une somme des taux de néodyme et de praséodyme compris entre 28 et 35% en masse et un taux de bore compris entre 0.5 et 1.5% en masse.

2. Machine électrique tournante selon la revendication 1, **caractérisée en ce que** le taux de dysprosium est inférieur à 1.8% en masse.

3. Machine électrique tournante selon la revendication 1 ou 2, **caractérisée en ce que** le taux de dysprosium est inférieur à 0.03% en masse.

4. Machine électrique tournante selon la revendication 3, **caractérisée en ce qu'**une taille des grains de l'aimant (29) est inférieure à 8 micromètres.

5. Machine électrique tournante selon la revendication 4, **caractérisée en ce que** la taille des grains est de l'ordre de 3 micromètres.

6. Machine électrique tournante selon l'une quelconque des revendications 1 à 5, **caractérisée en ce que** la somme des taux de néodyme et de praséodyme de chaque aimant (29) vaut 33% en masse.

7. Machine électrique tournante selon l'une quelconques des revendications 1 à 6, **caractérisée en ce que** le taux de bore de chaque aimant (29) vaut 1% en masse.

8. Machine électrique tournante selon l'une quelconque des revendications 1 à 7, **caractérisée en ce qu'**un taux de fer de chaque aimant (29) est au moins égal à 60% en masse.

9. Machine électrique tournante selon l'une quelconque des revendications 1 à 8, **caractérisée en ce qu'**une lame (30) recouvre une face de chaque aimant (29).

10. Machine électrique tournante selon l'une quelconque des revendications 1 à 9, **caractérisée en ce qu'**elle est apte à fonctionner à une tension choisie parmi une des tensions suivantes: 12 Volts, 14 Volts + X Volts dans le cadre d'un réseau électrique flottant, ou 48 Volts.

11. Compresseur de véhicule automobile **caractérisé en ce qu'**il comporte une machine électrique tournante (1) telle que définie selon l'une quelconque des revendications précédentes.

## Patentansprüche

1. Drehende elektrische Maschine (1), die dazu bestimmt ist, einen Klimakompressor eines Kraftfahrzeugs anzutreiben, umfassend einen Rotor (6), der einen Körper (23) beinhaltet, der mit einer Vielzahl von Hohlräumen (28) versehen ist, wobei in jedem von diesen mindestens ein Magnet (29) angeordnet ist, der aus Neodym-Eisen-Bor hergestellt ist, dessen Anteil Dysprosium kleiner als 2 Masse-% ist, **dadurch gekennzeichnet, dass** jeder Magnet (29) eine Summe der Anteile Neodym und Praseodym, die zwischen 28 und 35 Masse-% liegt, und einen Anteil Bor, der zwischen 0,5 und 1,5 Masse-% liegt, aufweist.

2. Drehende elektrische Maschine nach Anspruch 1, **dadurch gekennzeichnet, dass** der Anteil Dysprosium kleiner als 1,8 Masse-% ist.

3. Drehende elektrische Maschine nach Anspruch 1 oder 2, **dadurch gekennzeichnet, dass** der Anteil Dysprosium kleiner als 0,03 Masse-% ist.

4. Drehende elektrische Maschine nach Anspruch 3, **dadurch gekennzeichnet, dass** eine Korngröße des Magneten (29) kleiner als 8 Mikrometer ist.

5. Drehende elektrische Maschine nach Anspruch 4, **dadurch gekennzeichnet, dass** die Korngröße in der Größenordnung von 3 Mikrometern liegt.

6. Drehende elektrische Maschine nach einem der Ansprüche 1 bis 5, **dadurch gekennzeichnet, dass** die Summe der Anteile Neodym und Praseodym jedes Magneten (29) 33 Masse-% beträgt.

7. Drehende elektrische Maschine nach einem der Ansprüche 1 bis 6, **dadurch gekennzeichnet, dass** der Anteil Bor jedes Magneten (29) 1 Masse-% beträgt.

8. Drehende elektrische Maschine nach einem der Ansprüche 1 bis 7, **dadurch gekennzeichnet, dass** ein Anteil Eisen jedes Magneten (29) mindestens gleich 60 Masse-% ist.

9. Drehende elektrische Maschine nach einem der Ansprüche 1 bis 8, **dadurch gekennzeichnet, dass** eine Leiste (30) eine Fläche jedes Magneten (29) abdeckt.

10. Drehende elektrische Maschine nach einem der Ansprüche 1 bis 9, **dadurch gekennzeichnet, dass** sie fähig ist, mit einer Spannung zu arbeiten, die aus einer der folgenden Spannungen ausgewählt ist: 12 Volt, 14 Volt + X Volt im Fall eines schwebenden elektrischen Netzes oder 48 Volt.

11. Kompressor eines Kraftfahrzeugs, **dadurch gekennzeichnet, dass** er eine drehende elektrische Maschine (1), wie sie in einem der vorhergehenden Ansprüche definiert ist, umfasst.

## Claims

1. Rotary electric machine (1) intended to drive a motor-vehicle air-conditioning compressor, having a rotor (6) comprising a body (23) provided with a plurality of cavities (28) in each of which is positioned at least one magnet (29) made of neodymium iron boron, the dysprosium content of which is less than 2% by mass, **characterized in that** each magnet (29) has a sum of the neodymium and praseodymium contents of between 28 and 35% by mass and a boron content of between 0.5 and 1.5% by mass.

2. Rotary electric machine according to Claim 1, **characterized in that** the dysprosium content is less than 1.8% by mass.

3. Rotary electric machine according to Claim 1 or 2, **characterized in that** the dysprosium content is less than 0.03% by mass.

4. Rotary electric machine according to Claim 3, **characterized in that** a grain size of the magnet (29) is less than 8 micrometres.

5. Rotary electric machine according to Claim 4, **characterized in that** the grain size is of the order of 3 micrometres.

6. Rotary electric machine according to any one of Claims 1 to 5, **characterized in that** the sum of the neodymium and praseodymium contents of each magnet (29) has a value of 33% by mass.

7. Rotary electric machine according to any one of claims 1 to 6, **characterized in that** the boron content of each magnet (29) has a value of 1% by mass.

8. Rotary electric machine according to any one of Claims 1 to 7, **characterized in that** an iron content of each magnet (29) is at least equal to 60% by mass.

9. Rotary electric machine according to any one of Claims 1 to 8, **characterized in that** a strip (30) covers a face of each magnet (29).

10. Rotary electric machine according to any one of Claims 1 to 9, **characterized in that** it is able to operate at a voltage chosen from one of the following voltages: 12 volts, 14 volts + X volts in the context of a floating electrical network, or 48 volts.

11. Motor-vehicle compressor **characterized in that** it comprises a rotary electric machine (1) as defined according to any one of the preceding claims.
